# EUROPEAN PATENT SPECIFICATION

(11) **EP 1 225 354 B1**
(45) Date of publication and mention of the grant of the patent: **19.07.2006**
(21) Application number: 02001610.1
(22) Date of filing: 23.01.2002
(51) Int. Cl.: F16C 33/66

(54) **Solid polymeric lubricant composition and polymeric lubricant packed rolling bearing**
Polymere Festschmierstoffzusammensetzung und mit polymerem Schmierstoff versehenes Wälzlager
Composition de lubrifiant polymère solide et palier à roulement garni de lubrifiant polymère

(30) Priority: 23.01.2001 JP 2001014362
(43) Date of publication of application: 24.07.2002
(73) Proprietor: JTEKT Corporation, Osaka-shi Osaka 542-8502 (JP)
(72) Inventor: Nakata, Ryuji, Osaka-shi, Osaka-fu (JP)
(74) Representative: GROSSE BOCKHORNI SCHUMACHER

(56) References cited:
- WO-A-00/47700
- GB-A- 2 274 140
- US-A- 4 492 415
- US-A- 4 534 871
- PATENT ABSTRACTS OF JAPAN vol. 2000, no. 13, 5 February 2001 (2001-02-05) & JP 2000 273478 A (NSK LTD), 3 October 2000 (2000-10-03)

## Description

### BACKGROUND OF THE INVENTION

The present invention relates to a solid polymeric lubricant composition or a so-called polymeric lubricant which is obtained by mixing a polymer with lubricating oil or grease and solidifying the mixture, and also to a polymeric lubricant packed rolling bearing in which such a polymeric lubricant is packed in a space between an inner race, an outer race and rolling elements.

In a rolling bearing, in order to improve the lubricity between an inner raceway surface and rolling elements, or between an outer raceway surface and the rolling elements, lubricating oil is usually supplied into or grease is packed in an annular space between an inner race and an outer race. In order to supply lubricating oil or seal grease in such a space between the inner race and the outer race, or to prevent water, a foreign material or the like from entering from the outside into the space, a contact type seal, a labyrinth seal or the like is used so as to hermetically seal or isolate from the outside the space between the inner race and the outer race.

When a rolling bearing, such as a self-aligning rolling bearing, in which one raceway surface configured by a spherical surface is formed on an outer race and two raceway surfaces are formed on an inner race, is used under certain conditions, there is however a case where rolling elements rotate while being projected from the outer raceway surface. In such a case, when one of usual lubrication methods such as those described above is employed, there arises the possibility that lubricating oil or grease leaks out to the outside of the bearing.

As one of countermeasures against such a case, conventionally, a technique is employed in which a polymeric lubricant that is obtained by heating and solidifying a mixture of a synthetic resin, and lubricating oil or grease is packed in a space formed between an inner race and an outer race (for example, Japanese Patent Publication (Kokai) No. HEI6-50330). When a rolling bearing of the grease packed type is used as a rolling bearing to be placed at, for example, a high overhead location or an inner location of an apparatus, it is difficult to conduct lubrication maintenance such as grease additional injection. Also for such a purpose, therefore, a polymeric lubricant packed rolling bearing is often used.

In such a polymeric lubricant packed rolling bearing, the lubricating oil or grease contained in the polymer is gradually released by rotation of the rolling bearing to penetrate between the raceway surfaces of the inner and outer races and the rolling elements, so that a satisfactory lubrication state can be maintained over a long term.

Usually, a conventional polymeric lubricant is obtained by solidifying a mixture of an ultrahigh molecular weight polyethylene resin and lubricating oil or grease. Such a polymeric lubricant can be packed between inner and outer races of a rolling bearing in the following manner. The mixture is heated and melted. The mixture in a molten state is filled into the space between the inner and outer races and the rolling elements by, for example, the injection molding method. Thereafter, the mixture is cooled and solidified.

In such a conventional polymeric lubricant packed rolling bearing, when the base oil to be contained in the polymeric lubricant has a high viscosity, the rotational torque of the bearing is increased. When the raw material of the polymeric lubricant is filled into the bearing, moreover, the raw material hardly enters minute spaces, with the result that voids in which the polymeric lubricant is not formed remain.

By contrast, when the viscosity of the base oil is set to be low, the above problems can be solved, but an oil film is insufficiently formed when the bearing is rotated, thereby causing a further problem in that seizure between the raceway surfaces of the inner and outer races and the rolling elements easily occurs.

Document Patent Abstracts of Japan, Vol 2000, no 13, 05/02/2001 and JP 2000 273478 of 3/10/2000 discloses a rolling bearing with scorch resistance, which uses a grease lubricant composition of a polymer and a viscous agent.

### SUMMARY OF THE INVENTION

The invention has been conducted in view of these problems. It is an object of the invention to provide a solid polymeric lubricant composition which, when the composition is packed in a polymeric lubricant packed rolling bearing, does not increase the rotational torque of the bearing, and prevents voids from being formed when the composition is packed in the bearing, and seizure from occurring when the rolling bearing is rotated, and also to provide a polymeric lubricant packed rolling bearing in which such a solid polymeric lubricant composition is packed.

In order to attain the object, the solid polymeric lubricant composition of the invention is a solid polymeric lubricant composition which is obtained by mixing a polymer with lubricating oil and solidifying the mixture, and characterized in that the kinematic viscosity of the lubricating oil is in a range of 10 to 200 mm²/s at 40°C, and an extreme pressure additive and/or an antiwear agent is blended with the lubricating oil (claim 1).

In the solid polymeric lubricant composition of the invention, preferably, a blending ratio of the extreme pressure additive and/or the antiwear agent to the lubricating oil is 0.5 to 10 wt% (claim 2). A more preferable range of the blending ratio is 2 to 5 wt%.

The polymeric lubricant packed rolling bearing of the invention is a rolling bearing comprising a plurality of rolling elements rotatably placed between an inner race and an outer race, and a polymeric lubricant being packed in a space formed between the inner race, the outer race and the rolling elements, and wherein the polymeric lubricant is a solid polymeric lubricant composition according to claim 1 or 2.

In the invention, the viscosity of the lubricating oil which is the base oil of the solid polymeric lubricant composition obtained by mixing a polymer with lubricating oil and solidifying the mixture is lowered so that, when the composition is packed in a bearing, the rotational torque of the bearing is reduced, and voids are prevented from being formed when the composition is packed and formed in the bearing, and seizure during rotation of the bearing is prevented from occurring, by blending an extreme pressure additive and/or an antiwear agent.

Specifically, the kinematic viscosity of the lubricating oil which is the base oil of a polymeric lubricant is set to be in a range of 10 to 200 mm²/s at 40°C, whereby, when the composition is packed in a bearing, the rotational torque of the bearing can be sufficiently reduced, and, in a process of sealing and forming the composition in the bearing, the composition can be filled and packed without forming voids. In the case of lubricating oil of a kinematic viscosity in such a range, there is the possibility that seizure may occur during rotation of the bearing. Such seizure can be suppressed by the extreme pressure additive and/or the antiwear agent blended with the lubricating oil.

The blending ratio of the extreme pressure additive and/or the antiwear agent to the base oil is preferably set to 0.5 to 10 wt% as in the invention set forth in claim 2. When the blending ratio is smaller than 0.5 wt%, the effect of the additive is not sufficiently attained, and hence such a blending ratio is not preferable. When the blending ratio is larger than 10 wt%, the flow characteristic of the base oil such as the kinematic viscosity is adversely affected, and hence such a blending ratio is not preferable.

As the lubricating oil which is used as the base oil of the solid polymeric lubricant composition of the invention, any kind of oils including the whole of mineral oils, synthetic hydrocarbons, ether oils, ester oils, silicon oils, and fluorine oils can be used as far as the kinematic viscosity is in the above-mentioned range. As the extreme pressure additive and/or the antiwear agent which is blended with the base oil, useful are any kind of extreme pressure additives and antiwear agents including: the whole of organometallic complexes such as Mo dithiocarbamate and Zn dithiophosphate; sulfur compounds such as diester sulfide and benzyl sulfide; phosphor compounds such as tricresyl phosphate and phosphate ester; and halogen compounds such as alkyl benzene chloride.

In the polymeric lubricant packed rolling bearing of the invention set forth in claim 3 in which such a solid polymeric lubricant composition is packed in a space formed between the inner race and the outer race, and the rolling elements, the low viscosity of the base oil of the polymeric lubricant enables the rotational torque to be reduced, and improves the filling factor of the polymeric lubricant in the bearing, so that the life period of the bearing is prolonged, a function of preventing a foreign material from entering the bearing is improved, and seizure hardly occurs.

### BRIEF DESCRIPTION OF THE DRAWING

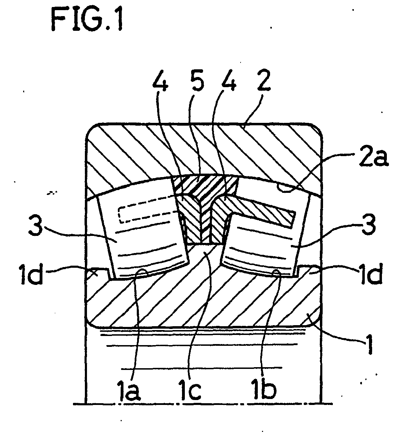

Fig. 1 is a section view of an embodiment of the invention taken parallel to the axis.

### DETAILED DESCRIPTION OF PREFERRED EMBODIMENTS

Hereinafter, an embodiment of the invention will be described with reference to the accompanying drawing.

Fig. 1 is a section view of an embodiment of the invention taken parallel to the axis.

In the embodiment, the invention is applied to a self-aligning rolling bearing. Two raceway surfaces 1a and 1b which are parallel to each other are formed on the outer periphery of an inner race 1 on both sides of a guiding flange 1c, respectively. A drop-out preventing flange 1d is formed on the outer side of each of the raceway surfaces 1a and 1b. One raceway surface 2a configured by a spherical surface is formed on the inner periphery of an outer race 2.

In an annular space between the inner race 1 and the outer race 2, a plurality of rollers (rolling elements) 3 are placed along each of the two raceway surfaces 1a and 1b of the inner race 1 so as to be rotatable with respect to both the raceway surface 1a or 1b of the inner race 1, and the raceway surface 2a of the outer race 2 under the state where the rollers are held by a cage 4 with forming constant intervals therebetween in the circumferential direction.

A polymeric lubricant 5 is packed in gaps between the inner race 1 and the outer race 2, and the rollers 3. The polymeric lubricant 5 is obtained in the following manner. A raw material in which ultrahigh molecular weight polyethylene is mixed with lubricating oil, and which is in a molten state is poured into the gaps between the inner race 1 and the outer race 2, and the rollers 3 of the assembled self-aligning rolling bearing. Thereafter, the mixture is cooled and solidified.

The kinematic viscosity of the lubricating oil which is the base oil of the polymeric lubricant 5 is lower than that of lubricating oil which is conventionally used as the base oil of a polymeric lubricant of this kind, and set to be in a range of 10 to 200 mm²/s (preferably, 100 to 160 mm²/s). An extreme pressure additive and/or an antiwear agent is blended with the lubricating oil at a ratio in a range of 0.5 to 10 wt% (preferably, 2 to 5 wt%).

In the above-described embodiment of the invention, when the raw material of the polymeric lubricant 5 in a heated and molten state is poured into the self-aligning rolling bearing and then cooled and solidified, the viscosity of the raw material in a molten state which is mixed with a polymer such as ultrahigh molecular weight polyethylene is lowered because the base oil has a low viscosity as described above, and hence the raw material in a molten state enters every corners and gaps inside the bearing. As a result, the filling factor of the polymeric lubricant 5 in the bearing is high. After the polymeric lubricant 5 in a solidified state is incorporated in the bearing, the rotational torque of the bearing is reduced because the lubricating oil released from the polymeric lubricant 5 during rotation of the bearing has a low viscosity as described above. Since, although the viscosity of the lubricating oil is low, the extreme pressure additive and/or the antiwear agent is blended, an extreme pressure film is formed between the raceway surfaces 1a and 1b of the inner race 1 and the raceway surface 2a of the outer race 2, and the rollers 3. Therefore, seizure does not occur. The solid polymeric lubricant composition may be configured in the following manner. The lubricating oil is a mineral oil having a kinematic viscosity of 145 to 155 mm²/s at 40°C. The extreme pressure additive and/or the antiwear agent is 1.5 to 2.5 wt% of phosphate or a carbamate in organometallic complexes in which the metal element is Zn or Mo. The polymer is an ultrahigh molecular weight polyethylene resin in which the molecular weight is 1,950,000 to 2,050,000 and the melting point is 130 to 140°C. When configured in this way, it was possible to obtain a particularly excellent solid polymeric lubricant composition which exhibits in a well-balanced manner all of the properties of the low torque, the seizure preventing capability, and the function of preventing a foreign material from entering.

In the embodiment, the example in which the polymeric lubricant 5 which is the solid polymeric lubricant composition of the invention is packed in a self-aligning rolling bearing has been described. It is possible to attain the same effects even when the polymeric lubricant is packed in a ball bearing, a cylindrical roller bearing, a tapered roller bearing, or the like. Furthermore, the polymeric lubricant can be applied also to a device other than a bearing, for example, a linear guide device.

As described above, according to the invention, in a solid polymeric lubricant composition which is obtained by mixing a polymer with lubricating oil and solidifying the mixture, lubricating oil of a low kinematic viscosity in a range of 10 to 200 mm²/s is used as lubricating oil which is the base oil of the composition, and an extreme pressure additive and/or an antiwear agent is blended with the lubricating oil. When the composition in a molten state is filled and solidified in, for example, a bearing, therefore, the molten composition enters every corners and gaps in the bearing and is then solidified. Consequently, the filling factor of the solid polymeric lubricant composition in the bearing can be improved, the life period of the bearing can be prolonged, and a function of preventing a foreign material from entering the bearing can be improved. Moreover, the viscosity of the base oil is low. When the composition is packed in a bearing, therefore, the rotational torque of the bearing can be reduced as compared with that of a bearing in which a conventional lubricant of this kind is used. Furthermore, seizure can be prevented from occurring by the presence of the extreme pressure additive and/or the antiwear agent.

## Claims

1. A solid polymeric lubricant composition which is obtained by mixing a polymer with lubricating oil and solidifying said mixture, wherein
the kinematic viscosity of said lubricating oil is in a range of 10 to 200 mm²/s at 40°C, and an extreme pressure additive and/or an antiwear agent is blended with said lubricating oil.

2. A solid polymeric lubricant composition according to claim 1, wherein a blending ratio of said extreme pressure additive and/or said antiwear agent to said lubricating oil is 0.5 to 10 wt%.

3. A polymeric lubricant packed rolling bearing comprising a plurality of rolling elements rotatably placed between an inner race and an outer race, and a polymeric lubricant packed in a space formed between said inner race, said outer race and said rolling elements, wherein
said polymeric lubricant is a solid polymeric lubricant composition according to claim 1 or 2.

## Patentansprüche

1. Polymere Festschmierstoffzusammensetzung, die durch Mischen eines Polymers mit Schmieröl und Verfestigen der Mischung gewonnen ist, wobei
die kinematische Viskosität des Schmieröls in einem Bereich von 10 bis 200 mm²/s bei 40 °C liegt, und ein Hochdruckadditiv und/oder ein AntiVerschleiß-Mittel mit dem Schmieröl gemischt ist.

2. Polymere Festschmierstoffzusammensetzung nach Anspruch 1, wobei
ein Mischverhältnis des Hochdruckadditivs und/oder des Anti-Verschleiß-Mittels mit dem Schmieröl 0,5 bis 10 Gew.-% beträgt.

3. Mit polymerem Schmierstoff gefülltes Wälzlager, aufweisend eine Mehrzahl von Wälzelementen, die drehbar zwischen einer inneren Rollbahn und einer äußeren Rollbahn angeordnet sind, und einen polymeren Schmierstoff, der in einen zwischen der inneren Rollbahn, der äußeren Rollbahn und den Wälzelementen ausgebildeten Raum gefüllt ist, wobei
der polymere Schmierstoff eine polymere Festschmierstoffzusammensetzung nach Anspruch 1 oder 2 ist.

## Revendications

1. Composition lubrifiante polymère solide qui est obtenue par mélange d'un polymère avec une huile lubrifiante et solidification dudit mélange, dans laquelle
la viscosité cinématique de ladite huile lubrifiante est située dans la plage allant de 10 à 200 mm²/s à 40°C, et un additif extrême pression et/ou un agent anti-usure sont mélangés avec ladite huile lubrifiante.

2. Composition lubrifiante polymère solide selon la revendication 1, dans laquelle le rapport de mélange dudit additif extrême pression et/ou dudit agent anti-usure à ladite huile lubrifiante est de 0,5 à 10 % en poids.

3. Palier à roulement garni de lubrifiant polymère comprenant une pluralité d'éléments de roulement placés de façon rotative entre une piste intérieure et une piste extérieure, et un lubrifiant polymère tassé dans un espace formé entre ladite piste intérieure, ladite piste extérieure et lesdits éléments de roulement, dans lequel
ledit lubrifiant polymère est une composition lubrifiante polymère solide selon la revendication 1 ou 2.
